Europäisches Patentamt

European Patent Office

Office européen des brevets

(11) Publication number: **0 297 660**
**A1**

## EUROPEAN PATENT APPLICATION

(21) Application number: 88201290.9

(51) Int. Cl.⁴: **F02B 29/04 , F02M 33/00**

(22) Date of filing: 23.06.88

(30) Priority: 29.06.87 BE 8700728

(43) Date of publication of application:
04.01.89 Bulletin 89/01

(84) Designated Contracting States:
**BE DE FR GB**

(71) Applicant: **Van den Berge, René**
**Biesthoevelaan, 36**
**B-2610 Antwerpen (Wilrijk)(BE)**

(72) Inventor: **Van den Berge, René**
**Biesthoevelaan, 36**
**B-2610 Antwerpen (Wilrijk)(BE)**

(74) Representative: **Ottelohe, Jozef René**
**Bureau Ottelohe J.R. Postbus 3 Fruithoflaan**
**105**
**B-2600 Antwerpen (Berchem)(BE)**

(54) **Device for supplying dry air to combustion engines and installations.**

(57) The invention is for a device for supplying dry air to combustion engines and combustion installations.

The device is equipped with an air filter and a carburettor or evaporator for the vaporization of the fuel and air mixture, whereby between the air filter and the carburettor or evaporator, an air drier is installed for the removal of moisture from the air.

EP 0 297 660 A1

## Device for supplying dry air to combustion engines and installations.

The invention is for a device for supplying dry air to combustion engines and combustion installations.

A disadvantage of existing combustion engines and installations is that in certain damp weather conditions, the nevertheless clean but relatively moist air added in certain proportions to a fuel, such as for example petrol (heptane), in for example a combustion engine, can be the cause of the poor combustion of the mix, so that the motor does not work properly, the fuel consumption rises and the engine is moreover exposed to corrosion.

An important objective of the invention is to counter these disadvantages by first making the air which has already been cleaned sufficiently dry and preferably cool by removing all excess moisture from it and then mixing this dried air with the fuel supplied to the engine or installation for driving this engine or installation. Carburation is greatly improved by this supply of dry air, so that fuel consumption remains moderate, the engine can be started in optimal conditions and the service life of the engine extended.

To this end according to the main characteristics of the invention an air drier for removing moisture from the air is installed between the air filter and the carburettor or evaporator of the engine or combustion installation, whereby moreover a cooler can be fitted in conjunction with the air drier for cooling the air, so that air of even better quality is obtained.

It goes without saying that the air drier and the cooler can be of whatsoever sort, shape and dimensions and can even be constructed as a combined unit.

## Claims

1.- Device for the supply of dry air to combustion engines and installations which are equipped with an air filter and a carburettor or evaporator for the vaporization of the fuel and air mixture, characterized by the fact that between the air filter and the carburettor or evaporator, an air drier is installed for the removal of moisture from the air.

2.- Device as claimed in claim 1, characterized by the fact that between the air filter and the carburettor or evaporator an air drier and a cooler is installed for cooling the dried air.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| P,X | US-A-4 708 120 (D.O. MANN)<br>* column 1, line 28 - column 3, line 20; figures 1-3 * | 1,2 | F 02 B 29/04<br>F 02 M 33/00 |
| X | MOTORTECHNISCHE ZEITSCHRIFT, vol. 41, Nr. 9, September 1980, pages 375,376,379,380,383, Schwäbisch Gmünd, DE; J. DELESALLE: "Ein- oder zweistufige Aufladung? Das Verfahren mit reduziertem Verdichtungsverhältnis"<br>* page 379, column 1, lines 31-70; figure 6 * | 1,2 | |
| X | DE-C- 139 996 (H. PRAETORIUS)<br>* whole document * | 1 | |
| X | DE-C- 127 454 (PRAETORIUS)<br>* whole document * | 1 | |
| X | DE-C- 147 363 (W. THIEM)<br>* whole document * | 1 | |
| X | US-A-3 063 440 (C.A. TUZZALINO)<br>* whole document * | 1 | |
| A | FR-A- 897 842 (G. DATIN)<br>* whole document * | 1 | |

TECHNICAL FIELDS SEARCHED (Int. Cl.4)

F 02 B 29/00
F 02 M 33/00
F 02 M 35/00

The present search report has been drawn up for all claims

| Place of search | Date of completion of the search | Examiner |
|---|---|---|
| BERLIN | 24-08-1988 | NORDSTROEM U.L.N. |

EPO FORM 1503 03.82 (P0401)